(19) Europäisches Patentamt
European Patent Office
Office européen des brevets

(11) EP 2 869 435 A1

(12) EUROPÄISCHE PATENTANMELDUNG

(43) Veröffentlichungstag:
06.05.2015 Patentblatt 2015/19

(51) Int Cl.:
*H02K 3/40* (2006.01)

(21) Anmeldenummer: 13191587.8

(22) Anmeldetag: 05.11.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Staubach, Christian**
  **45768 Marl (DE)**
• **Litinsky, Alexander**
  **45470 Mülheim (DE)**
• **Mashkin, Andrey**
  **50672 Köln (DE)**

(54) **Isolieranordnung, elektrisches Betriebsmittel und elektrische Maschine mit erhöhter Lebensdauer**

(57) Die vorliegende Erfindung offenbart eine Isolieranordnung (100) mit einem Außenglimmschutz (AGS), mindestens einer Lage (10) erster Isolierabschnitte (1a, 1b, 1c) und mindestens eine Lage (20) zweiter Isolierabschnitte (2a, 2b, 2c). Die ersten Isolierabschnitte (1a, 1b, 1c) sind zueinander anders angeordnet, als die zweiten Isolierabschnitte (2a, 2b, 2c) zueinander angeordnet sind. Weiter offenbart die vorliegende Erfindung ein Betriebsmittel (200) umfassend mindestens einen Leiter und mindestens eine Isolieranordnung (100) der vorliegenden Erfindung. Darüber hinaus offenbart die vorliegende Erfindung auch eine elektrische Maschine (300) umfassend mindestens eine Isolieranordnung (100) und/oder mindestens ein Betriebsmittel (200) der vorliegenden Erfindung.

FIG 1

EP 2 869 435 A1

**Beschreibung**

Die Erfindung liegt auf dem Gebiet von Isolieranordnungen, elektrischen Betriebsmitteln und elektrischen Maschinen, die eine bessere Standhaftigkeit gegenüber hohen Spannungen und Strömen aufweisen. Derartige Isolieranordnungen, elektrische Betriebsmittel und/oder elektrische Maschinen umfassend das erfindungsgemäße Betriebsmittel und/oder die erfindungsgemäße Isolieranordnung sind insbesondere für drehende elektrische Maschinen, zum Beispiel Generatoren und/oder Motoren interessant.

Dem Fachmann ist bekannt, dass eine maximal mögliche Leistung einer elektrischen Maschine, zum Beispiel eines Generators begrenzt ist durch eine Isolationsfähigkeit der in der elektrischen Maschine verwendeten Isolierstoffe. Um die Leistung einer elektrischen Maschine steigern zu können, muss die elektrische Maschine erhöhten Temperaturen standhalten, die sich aufgrund der zusätzlichen elektrischen Verluste bei dem Betrieb mit höherer Leistung ergeben. Mit zunehmender Leistung müssen also Isolationsstoffe höherer Isolationsstoffklassen verwendet werden. Darüber hinaus ergeben sich aufgrund einer Leistungssteigerung Ermüdungserscheinungen an einer Isolierung der elektrischen Maschine, die zu einer beschleunigten Alterung der elektrischen Maschine führen und/oder aufwändige Reparaturen an der Isolierung bzw. an einzelnen Schichten der Isolierung erforderlich machen. Bei hohen Bemessungsspannungen und/oder Strömen müssen elektrische Leiter bzw. elektrische Betriebsmittel, wie zum Beispiel Generatorwicklungsstäbe, Transformatoren, Durchführungen oder Kabel bei Betriebsspannungen in Höhe von einigen Kilovolt mit einer inneren und einer äußeren Leitschicht gegen Hohlräume und Ablösungen abgeschirmt werden. Diese Maßnahmen sind dem Fachmann als innere Potentialsteuerung und Außenglimmschutz AGS bekannt. Die auftretende elektrische Spannung wird in einer Hauptisolierung ausgehend von der inneren Potentialsteuerung IPS in radialer Richtung bis zum Außenglimmschutz AGS abgebaut.

Der Außenglimmschutz muss dabei einen gewissen Flächenwiderstand aufweisen, der einen bestimmten unteren Grenzwert nicht unterschreiten darf. Bei Unterschreitung des unteren Grenzwerts können hohe induzierte Kreisströme, die über die Enden des Blechpakets und den Außenglimmschutz schließen, zu stromstarken Lichtbögen führen, sogenanntem Vibration Sparking. Eine Übersicht über das Phänomen des Vibration Sparkings ist zum Beispiel zu finden, in M. Liese, M. Brown, "Design Dependent Slot Discharge and Vibration Sparking on High Voltage Windings", IEEE TRANS DEI, August 2008, S. 927 - 932. Ist der Widerstand bzw. der Flächenwiderstand des Außenglimmschutzes zu hoch, kann es zu Hochspannnungsfunkenerosion kommen. Es ist daher wünschenswert, dass ein idealer Außenglimmschutz AGS eine ausgeprägte Anisotropie im Widerstandsverhalten aufweist. Dafür sollte der Widerstand in axialer Richtung sehr hoch sein, in radialer Richtung hingegen sehr gering. Ein derartiger anisotroper Verlauf des Widerstands des Außenglimmschutzes AGS lässt sich allerdings nur schwer realisieren.

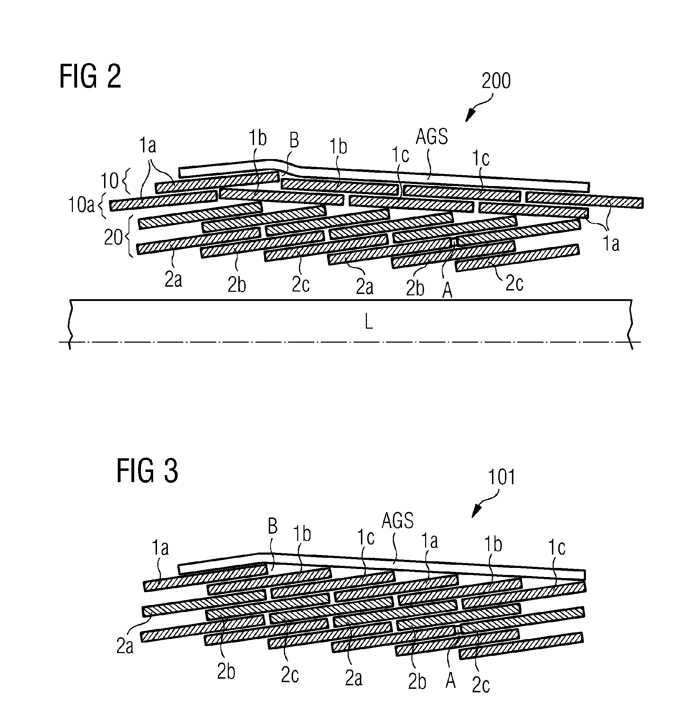

Im Stand der Technik wurde eine Isolationsanordnung wie in Figur 3 gezeigt verwendet. In derartigen Anordnungen der Hauptisolierung kam es zu einer beschleunigten, elektrischen Alterung des Außenglimmschutzes AGS durch Teilentladungen, die hauptsächlich durch Feldstärkeüberhöhungen innerhalb der Hauptisolierung, das heißt innerhalb der Isolieranordnung 101 wie in Fig. 3 gezeigt, bedingt sind. Die Isolieranordnung 101 im Stand der Technik ist aufgebaut aus einzelnen halb überlappenden Bändern 1a, 1b, 1c, welche an ihren jeweiligen Kanten der einzelnen, halb überlappenden Bänder 1a, 1b, 1c, insbesondere an Grenzflächen der Hauptisolierung zum Außenglimmschutz AGS zu einer Lunkerbildung führen. Der Fachmann wird verstehen, dass anstelle der in Fig. 3 beispielhaft gezeigten drei halbüberlappenden Bänder 1a, 1b, 1c auch nur eine, zwei oder mehr Lagen von halbüberlappenden Bändern verwendet werden könnten. Derartige Lunker B zwischen dem Außenglimmschutz und Kanten der Isolationselemente 1a, 1b, 1c, die zur Hälfte überlappen, ist in Figur 3 in einer schematischen Darstellung gezeigt. Während ein Lunker A innerhalb der Hauptisolierung zu inneren Teilentladungen TE führen kann, die jedoch aufgrund eines typischerweise hohen Glimmeranteils innerhalb der Isolierabschnitte 1a, 1b, 1c, 2a, 2b, 2c lokal begrenzt bleiben, können Teilentladungen in den mit B bezeichneten Lunker das nicht glimmerhaltige AGS-Material des Außenglimmschutzes beschleunigt altern lassen.

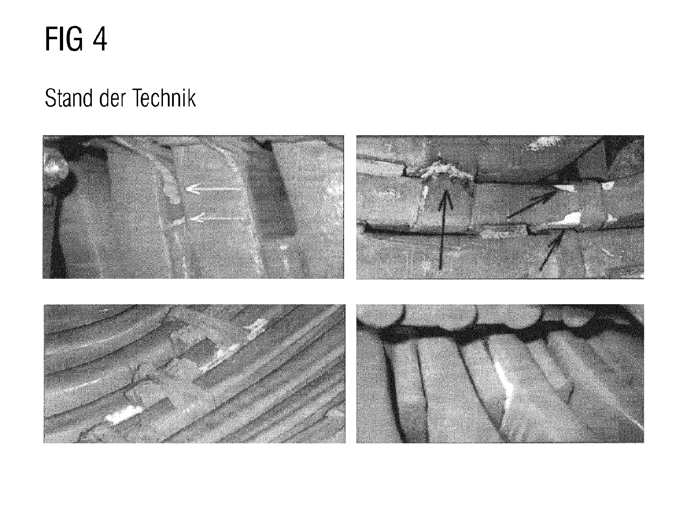

Figur 4 zeigt Beispiele eines Lichtbogenbrands (Corona burn), wie links oben durch Pfeile angedeutet. Rechts oben sind weitere Pfeile gezeigt, die eine Beschädigung einzelner Isolierabschnitte der in Figur 4 gezeigten Isolieranordnung zeigen. Auch in den unteren beiden Teilbildern sind Beschädigungen an einer Isolieranordnung 101 im Stand der Technik gezeigt, die sich typischerweise aus der in Fig. 3 gezeigten Struktur der Isolieranordnung 101 gemäß dem Stand der Technik ergeben. Die in Figur 4 gezeigten Beschädigungen sind entnommen aus W. H. Moudy, "Deterioration Mechanisms in Recent Air Cooled Turbine Generators", ASME Power, Atlanta, Georgia 2006 (obere Teilbilder) und G. C. Stone, "A perspective on online partial discharge monitoring for assessment of the condition of rotating machine stator winding insulation" IEEE Electrical Insulation Magazine, 2012 (untere Teilbilder in Figur 4).

Die vorliegende Erfindung hat es sich zur Aufgabe gemacht, die aus dem Stand der Technik bekannten Schwierigkeiten zu überwinden. Dazu schlägt die vorliegende Erfindung eine Isolieranordnung, ein elektrisches Betriebsmittel und eine elektrische Maschine vor.

Die vorliegende Erfindung offenbart in einem Aspekt eine Isolieranordnung mit einem Außenglimmschutz, mindestens einer Lage erster Isolierabschnitte und mindestens einer Lage zweiter Isolierabschnitte. Erfindungsgemäß können die ersten Isolierabschnitte anders zueinander angeordnet sein als die zweiten Isolierabschnitte zueinander angeordnet sind. Bei den Isolierabschnitten kann es sich um Isolierabschnitte handeln, die eine regelmäßige Größe aufweisen, zum Beispiel quaderförmig sind. Ohne Einschränkung sind jedoch auch andere geometrische Formen der ersten und/oder zweiten Isolierabschnitte möglich. Weiter bevorzugt können die ersten Isolierabschnitte und die zweiten Isolierabschnitte identische und/oder unterschiedliche Materialien umfassen.

Weiter bevorzugt können erste Isolierabschnitte der mindestens einen Lage zumindest abschnittsweise mit dem Außenglimmschutz in Kontakt sein.

Dadurch reduziert sich eine Lunkergröße zwischen Außenglimmschutz und Isolierabschnitten, wodurch Beschädigungen des Isoliermaterials weniger wahrscheinlich werden.

Weiter bevorzugt können zumindest ausgewählte der ersten Isolierabschnitte in einer ersten Lage auf Stoß relativ zueinander angeordnet sein. Dabei soll unter dem Begriff "auf Stoß" im Folgenden verstanden werden, dass eine erste Seite eines ersten Isolierabschnitts mit einer zweiten Seite eines weiteren ersten Isolierabschnitts im Wesentlichen aneinanderstößt. Typischerweise handelt es sich bei der ersten Seite um die schmälere der Seitenflächen eines Isolierkörpers. Mit anderen Worten werden einzelne der ersten Isolierabschnitte unmittelbar hintereinander gelegt, wobei die gleichen Seiten der aufeinanderfolgenden Isolierabschnitte aufeinanderstoßen. Von Bodenbelägen, zum Beispiel Parkett ist bekannt, dass einzelne der Abschnitte auf Stoß aneinanderstoßen. Auf Stoß ist im Folgenden auch so zu verstehen, dass ein geringer Abstand zwischen einanderstoßenden Isolierelementen bestehen darf. Auf Stoß ist daher nicht zwangsläufig gleichbedeutend mit einer Aneinanderfügung ohne Fugen.

Gemäß einer bevorzugten Ausführungsform können zumindest ausgewählte der zweiten Isolierabschnitte in einer ersten Lage überlappend zueinander angeordnet sein. Der Begriff "überlappend" soll im Folgenden so verstanden werden, dass Längsseiten einzelner der Isolierabschnitte im Wesentlichen parallel zueinander angeordnet sind bzw. einander nur mit kleinem Abstand zugeordnet sind. Dabei sind allerdings die einzelnen der Isolierelemente oder Isolierabschnitte in ihrer Längsrichtung gegeneinander verschoben. Das Ausmaß dieser Verschiebung wird auch als Überlapp bezeichnet.

Weiter bevorzugt können einzelne der zweiten Isolierabschnitte zueinander überlappend angeordnet sein. Bevorzugt beträgt der Überlapp der einzelnen zweiten Isolierabschnitte 50%.

Weiter bevorzugt kann die Isolieranordnung eine zweite Lage der ersten Isolierabschnitte umfassen. Weiter bevorzugt sind zumindest ausgewählte der Isolierabschnitte in der zweiten Lage auf Stoß zueinander angeordnet.

Weiter bevorzugt können ausgewählte der ersten Isolierabschnitte in der zweiten Lage in Kontakt mit mindestens einem einzelnen der ersten Isolierabschnitte der mindestens einen Lage sein.

Weiter bevorzugt kann die Isolieranordnung mindestens eine zweite Lage zweiter Isolierabschnitte umfassen, die überlappend zueinander angeordnet sind. Weiter bevorzugt kann der Überlapp der zweiten Isolierabschnitte in der mindestens einen zweiten Lage im Wesentlichen 50% betragen.

Weiter bevorzugt kann zwischen mindestens einem der zweiten Isolierabschnitte der ersten Lage und einem einzelnen der zweiten Isolierabschnitte der mindestens einen zweiten Lage ein Lunker A ausgebildet sein. Die Ausbildung des Lunkers ist insofern für die Isolationsfähigkeit nicht von Nachteil, da es innerhalb der Isolierabschnitte zu Teilentladungen kommen kann, welche jedoch durch einen hohen Glimmeranteil innerhalb der ersten und/oder zweiten Isolierabschnitte lokal begrenzt bleibt. Dadurch reduziert sich die Gefahr einer Teilentladung, die in einer Funkenstrecke bzw. einem Lichtbogen durchschlägt.

Weiter bevorzugt kann die Isolieranordnung für die ersten Isolierabschnitte und/oder die zweiten Isolierabschnitte einen Glimmeranteil aufweisen. Typischerweise ist dieser Glimmeranteil hoch, um innere Teilentladungen örtlich zu begrenzen.

Weiter bevorzugt kann der Außenglimmschutz überperkulär vorliegendes Graphit umfassen.

Der Außenglimmschutz kann zum Beispiel als Lack oder als durchimprägnierbares Band aufgebracht werden, wobei er einen Widerstandsbelag von zum Beispiel $10^4$ bis $10^5$ $\Omega$ aufweist.

In einem zweiten Aspekt offenbart die Erfindung ein elektrisches Betriebsmittel mit mindestens einem Leiter und mindestens einer erfindungsgemäßen Isolieranordnung. Weiter bevorzugt kann die mindestens eine Isolieranordnung das elektrische Betriebsmittel begrenzen und den mindestens einen Leiter zumindest abschnittsweise einschließen.

Bei dem elektrischen Betriebsmittel gemäß der vorliegenden Erfindung kann es sich zum Beispiel um eine Ständerwicklung eines Stators, ein Kabel und/oder eine Durchführung zum Beispiel in einer elektrischen rotierenden Maschine handeln.

In einem weiteren Aspekt offenbart die vorliegende Erfindung eine elektrische Maschine, die mindestens eine Isolieranordnung und/oder ein erfindungsgemäßes Betriebsmittel aufweist. Durch die Verwendung der erfindungsgemäßen Isolieranordnung wird die Lebensdauer der elektrischen Maschine erhöht, weil keine so starken Alterungserscheinungen mehr auftreten an der Isolieanordnung und/oder dem erfindungsgemäßen Betriebsmittel, wie sie aus dem Stand der Technik bekannt sind.

Weiter bevorzugt kann die erfindungsgemäße elektrische Maschine ein elektrisches Betriebsmittel gemäß der vorliegenden Erfindung umfassen.

Weiter bevorzugt ist die elektrische Maschine eine drehende elektrische Maschine, insbesondere ein Motor oder ein Generator.

In Folgenden werden bevorzugte Ausführungsformen der erfindungsgemäßen Isolieranordnung, des erfindungsgemäßen elektrischen Betriebsmittels, und/oder der erfindungsgemäßen elektrischen Maschine anhand der beigefügten schematischen Zeichnungen erläutert. Es zeigt:

Figur 1     eine Isolieranordnung gemäß der vorliegenden Erfindung,

Figur 2     ein elektrisches Betriebsmittel gemäß der vorliegenden Erfindung,

Figur 3     eine Isolierung 101 gemäß dem Stand der Technik,

Figur 4     Beschädigungen an Isolierungen 101 des Standes der Technik, die aufgrund der vorliegenden Erfindung reduziert werden sollen.

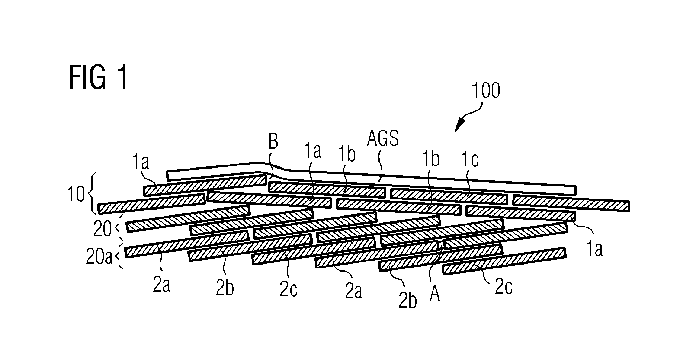

Figur 1 zeigt eine Isolieranordnung 100 gemäß der vorliegenden Erfindung. Die Isolieranordnung 100 umfasst einen Außenglimmschutz AGS, erste Isolierabschnitte 1a, 1b, 1c sowie zweite Isolierabschnitte 2a, 2b, 2c. Die ersten Isolierabschnitte sind in zumindest einer ersten Lage 10 auf Stoß zueinander angeordnet, zumindest soweit dies die Kontur des Außenglimmschutzes AGS zulässt. Sofern der Außenglimmschutz AGS einen Knick aufweist (in Figur 1 im linken ersten Drittel des Außenglimmschutzes), folgt die erste Lage 10 von ersten Isolierabschnitten 1a, 1b, 1c diesem Knick, wodurch sich ein Lunker B ergeben kann, der jedoch, aufgrund der Anordnung der ersten Isolierabschnitte 1a, 1b, 1c auf Stoß und in Kontakt mit dem Außenglimmschutz AGS deutlich kleiner ist, als dies noch in einer Isolieranordnung 101 aus dem Stand der Technik, wie in Figur 3 gezeigt, der Fall war.

Durch diese Anordnung wird eine durch die ersten Isolierabschnitte 1a, 1b, 1c zum Außenglimmschutz AGS geglättet, und die Größe des Lunkers B deutlich reduziert. Aus dieser Anordnung der ersten Isolierabschnitte 1a, 1b, 1c ist die Feldüberhöhung an freistehenden Kanten der mindestens einen Lage 10 von ersten Isolierabschnitten 1a, 1b, 1c reduziert. Es kann auch eine zweite Lage von ersten Isolierabschnitten 1a, 1b, 1c vorgesehen sein. Die ersten Isolierabschnitte 1a, 1b, 1c in der zweiten Lage 10a sind ebenfalls auf Stoß zueinander angeordnet. Das bedeutet, sie stoßen an, typischerweise den kurzen Seiten der ersten Isolierabschnitte 1a, 1b, 1c aneinander.

Die erfindungsgemäße Isolieranordnung 100 kann darüber hinaus zweite Isolierabschnitte 2a, 2b, 2c umfassen, die untereinander anders angeordnet sind als die ersten Isolierabschnitte 1a, 1b, 1c. Bevorzugt sind die zweiten Isolierabschnitte 2a, 2b, 2c in mindestens einer ersten Lage 20 überlappend angeordnet. Das bedeutet, dass einzelne der zweiten Isolierabschnitte 2a, 2b, 2c in ihrer Längsrichtung zumindest abschnittsweise aufeinanderliegen, sich also im Wesentlichen berühren. Es kann vorkommen, dass zwischen einzelnen der überlappenden zweiten Isolierabschnitte 2a, 2b, 2c ein Abstand von der Längsseite z.B. eines zweiten Isolierabschnitts 2b, zu einer Längsseite eines weiteren zweiten Isolierabschnitts 2a bleibt. Für den Fachmann ist jedoch verständlich, dass Hohlräume so weit als möglich vermieden werden sollen. Insofern ist diese in Figur 1 gegebene Darstellung nur schematisch. Bevorzugt beträgt der Überlapp unter einzelnen der zweiten Isolierabschnitte 2a, 2b, 2c in der ersten Lage 20 der zweiten Isolierabschnitte 50%. Ohne Einschränkung wären jedoch auch andere Werte denkbar. Einzelne der zweiten Isolierabschnitte 2a, 2b, 2c, der ersten Lage 20 können mit einzelnen der ersten Isolierabschnitte 1a, 1b, 1c, wie dies aus Figur 1 ersichtlich ist, in Kontakt sein.

In Figur 1 ist darüber hinaus eine zweite Lage 20a von zweiten Isolierabschnitten 2a, 2b, 2c gezeigt, die jeweils überlappend zueinander angeordnet sind. Die zweite Lage 20a von zweiten Isolierabschnitten 2a, 2b, 2c, kann, wie in Figur 1 gezeigt, im Wesentlichen anschließend zu der ersten Lage 20 von zweiten Isolierabschnitten 2a, 2b, 2c, angeordnet sein. Dabei kann es zu einer Ausbildung von Lunkern A im Inneren der Isolierung, genauer zwischen einzelnen der zweiten Isolierabschnitte 2a, 2b, 2c in der mindestens einen ersten Reihe 20 der zweiten Isolierabschnitte und der zweiten Reihe 20a der zweiten Isolierabschnitte 2a, 2b, 2c kommen. Aufgrund des bereits erwähnten hohen Glimmeranteils einzelner der ersten und/oder zweiten Isolierabschnitte 1a, 1b, 1c bzw. 2a, 2b, 2c, bleiben Teilentladungen innerhalb des Lunkers A örtlich begrenzt.

Weiter ist von Vorteil, dass Lunker an einer Grenzfläche von ersten Isolierabschnitten 1a, 1b, 1c, und dem Außenglimmschutz reduziert sind, so dass insbesondere eine kontinuierliche Teilentladungsaktivität während des Betriebs der elektrischen Maschine und/oder des Generators 300 (nicht gezeigt) vermieden wird.

In einem weiteren Aspekt offenbart die vorliegende Erfindung ein elektrisches Betriebsmittel 200, das mindestens eine Isolieranordnung 100 gemäß der vorliegenden Erfindung aufweist. In Figur 2 gezeigt ist ein Querschnitt durch ein elektrisches Betriebsmittel 200 in Form eines Kabels, das beispielhaft einen Leiter L umfasst, wobei das Betriebsmittel 200 und der Leiter L in Fig. 2 nur im Querschnitt gezeigt sind, wie durch die punktierte Symmetrieachse angedeutet. Der Fachmann wird verstehen, dass ohne Einschränkung weitere Leiter innerhalb des elektrischen Betriebsmittels 200 vorgesehen sein könnten. In der Schnittdarstellung in Figur 2 ist deutlich zu erkennen, dass oberhalb des Leiters eine Isolieranordnung 100 gemäß der vorliegenden Erfindung, wie sie bereits im Zusammenhang mit Figur 1 erläutert wurde, umfasst. An dem Außenglimmschutz AGS schmiegt sich auf die mindestens eine Lage 10 der ersten Isolierabschnitte 1a, 1b, 1c an, wodurch eine Lunkergröße an der Grenzfläche von Außenglimmschutz AGS und ersten Isolierabschnitten 1a, 1b, 1c deutlich reduziert wird, wie bereits erläutert. In Figur 2 sind zwei Lagen 10, 10a der ersten Isolierabschnitte 1a, 1b, 1c gezeigt. Unterhalb der beiden Lagen 10, 10a der ersten Isolierabschnitte 1a, 1b, 1c ist eine Lage 20 von zweiten Isolierabschnitten 2a, 2b, 2c gezeigt, die zueinander überlappend angeordnet sind. Dadurch reduziert sich eine Lunkergröße A zwischen einzelnen der zweiten Isolierabschnitte 2a, 2b, 2c, wie bereits im Zusammenhang mit Figur 1 erläutert. Die Isolieranordnung 100 kann für das Betriebsmittel 200 auch unterhalb des Leiters L, im Wesentlichen spiegelbildlich zu dem Leiter L angeordnet sein. Eine derartige Anordnung der Isolieranordnungen 100 um einen elektrischen Leiter L kommt zum Beispiel im Zusammenhang mit Ständerwicklungsstäben eines Generators und/oder Kabeln bzw. Durchführungen für Leiter L in Betracht.

In einem dritten Aspekt offenbart die vorliegende Erfindung eine elektrische Maschine, die zumindest eine Isolieranordnung 100, wie bereits erläutert umfasst. Darüber hinaus kann die elektrische Maschine (nicht gezeigt) auch ein elektrisches Betriebsmittel 200 wie im Zusammenhang mit Figur 2 erläutert umfassen.

Der Fachmann wird verstehen, dass die Isolieranordnung 100, das elektrische Betriebsmittel 200 und/oder die elektrische Maschine gemäß der vorliegenden Erfindung eine Vermeidung von Teilentladungen möglich macht, indem erreicht wird, dass die Einsatzfeldstärke, genauer die elektrische Feldstärke bei Einsatz der Isolieranordnung 100, des elektrischen Betriebsmittels 200 und/oder der elektrischen Maschine gemäß der vorliegenden Erfindung oberhalb der resultierenden Feldstärkeüberhöhung liegen. Anders als im Stand der Technik überschreitet die resultierende Feldstärkeüberhöhung das Paschen-Kriterium

$$V = \frac{Bpd}{\ln(Apd) - \ln\left[\ln\left(1 + \gamma^{-1}\right)\right]}$$

nicht mehr, wodurch Teilentladungen innerhalb der Hauptisolierung, insbesondere zwischen dem Außenglimmschutz AGS und Isolierabschnitten der Hauptisolierung, insbesondere ersten Isolierabschnitten 1a, 1b, 1c der mindestens einen Lage 10 nicht überschritten wird. In obiger Gleichung kennzeichnet V eine Spannung, p den Gasdruck, und d den Elektronenabstand, wobei A und B Konstanten sind und g für den 1. Townsend Koeffizienten steht. Die Durchschlagspannung V ist daher eine Funktion des Produkts pd, und bildet ein Minimum aus, das gemäß der vorliegenden Erfindung nicht mehr unterschritten wird.

Vorteilhaft wird gemäß der vorliegenden Erfindung eine Lebensdauer der Isolieranordnung 100, der Isolierung des elektrischen Betriebsmittels 200 und/oder der elektrischen Maschine 300 gemäß der vorliegenden Erfindung erhöht, weil erfindungsgemäß eine Beanspruchung einzelner Isolierabschnitte und/oder des Außenglimmschutzes AGS reduziert sind.

Obwohl die Erfindung im Detail durch bevorzugte Ausführungsbeispiele der Isolieranordnung 100, des elektrischen Betriebsmittels 200 und/oder der elektrischen Maschine 300 erläutert, illustriert und beschrieben wurde, so ist die Erfindung nicht durch die offenbarten Beispiele beschränkt und andere Variationen können vom Fachmann hieraus abgeleitet werden, ohne den Schutzumfang der Erfindung zu verlassen. Darüber hinaus können einzelne Aspekte und Vorteile der Erfindung, wie sie im Zusammenhang mit einzelnen Ausführungsformen erläutert wurden, ohne Schwierigkeiten durch den Fachmann kombiniert werden.

**Patentansprüche**

1. Isolieranordnung (100) umfassend:

   - einen Außenglimmschutz (AGS)
   - mindestens eine Lage (10) erster Isolierabschnitte (1a, 1b, 1c), und
   - mindestens eine Lage (20) zweiter Isolierabschnitte (2a, 2b, 2c);

   wobei ersten Isolierabschnitte (1a, 1b, 1c) anders zueinander angeordnet sind als die zweiten Isolierabschnitte (2a, 2b, 2c) zueinander angeordnet sind.

2. Isolieranordnung (100) gemäß Anspruch 1,
   wobei die ersten Isolierabschnitte (1a, 1b, 1c) und die zweiten Isolierabschnitte (2a, 2b, 2c) identisches oder unterschiedliches Material umfassen.

3. Isolieranordnung (100) gemäß einem der vorhergehenden Ansprüche, wobei die mindestens eine Lage (10) der ersten Isolierabschnitte (1a, 1b, 1c) zumindest abschnittsweise mit dem Außenglimmschutz (AGS) in Kontakt ist.

4. Isolieranordnung (100) gemäß einem der vorhergehenden Ansprüche, wobei zumindest ausgewählte der ersten Isolierabschnitte (1a, 1b, 1c) in einer ersten Lage (10a) auf Stoß relativ zueinander angeordnet sind.

5. Isolieranordnung (100) gemäß einem der vorhergehenden Ansprüche, weiter umfassend eine zweite Lage (10a) der ersten Isolierabschnitte (1a, 1b, 1c), wobei zumindest ausgewählte der ersten Isolierabschnitte (1a, 1b, 1c) in der zweiten Lage auf Stoß zueinander angeordnet sind.

6. Isolieranordnung (100) gemäß Anspruch 5, wobei die ausgewählten der ersten Isolierabschnitte (1a, 1b, 1c) in der zweiten Lage (10a) in Kontakt mit mindestens einem einzelnen der ersten Isolierabschnitte (1a 1b, 1c), der mindestens einen Lage (10) sind.

7. Isolieranordnung (100) gemäß einem der vorhergehenden Ansprüche, wobei zumindest ausgewählte der zweiten Isolierabschnitte (2a, 2b, 2c) in einer ersten Lage (20a) überlappend zueinander angeordnet sind.

8. Isolieranordnung (100) gemäß einem der vorhergehenden Ansprüche, wobei einzelne der zweiten Isolierabschnitte (2a, 2b, 2c) zueinander überlappend angeordnet sind.

9. Isolieranordnung (100) gemäß Anspruch 7 oder 8, wobei der Überlapp im Wesentlichen 50% zwischen einzelnen der zweiten Isolierabschnitte beträgt.

10. Isolieranordnung (100) gemäß einem der Ansprüche 7 bis 9, weiter umfassend mindestens eine zweite Lage (20b) zweiter Isolierabschnitte (2a, 2b, 2c), die überlappend zueinander angeordnet sind.

11. Isolieranordnung (100) gemäß Anspruch 10, wobei ein Überlapp der zweiten Isolierabschnitte (2a, 2b, 2c) in der mindestens einen zweiten Lage (20b) im Wesentlichen 50% beträgt.

12. Isolieranordnung (100) gemäß Anspruch 10 der 11, wobei zwischen mindestens einem der zweiten Isolierabschnitte (2a, 2b, 2c) der ersten Lage (20a) und einem einzelnen der zweiten Isolierabschnitte (2a, 2b, 2c) der mindestens einen zweiten Lage (20b) ein Lunker (A) ausgebildet ist.

13. Isolieranordnung (100) gemäß einem der vorhergehenden Ansprüche, wobei die ersten Isolierabschnitte (1a, 1b, 1c) und/oder die zweiten Isolierabschnitte (2a, 2b, 2c) einen Glimmeranteil aufweisen.

14. Isolieranordnung (100) gemäß einem der vorhergehenden Ansprüche, wobei der Außenglimmschutz (AGS) überperkulär vorliegendes Graphit umfasst.

15. Elektrisches Betriebsmittel (200) umfassend:

   - mindestens einen Leiter (L), und
   - mindestens eine Isolieranordnung gemäß einem der Ansprüche 1 bis 14.

16. Elektrisches Betriebsmittel (200) gemäß Anspruch 15, wobei die mindestens eine Isolieranordnung (100) das elektrische Betriebsmittel (200) zumindest abschnittsweise begrenzt und den mindestens einen Leiter (L) zumindest abschnittsweise einschließt.

**17.** Elektrisches Betriebsmittel (200) gemäß Anspruch 15 oder 16,
wobei das elektrische Betriebsmittel (200) eine Ständerwicklung eines Stators, eine Durchführung und/oder ein Kabel ist.

**18.** Elektrische Maschine umfassend mindestens eine Isolieranordnung (100) gemäß einem der Ansprüche 1 bis 14 und/oder ein elektrisches Betriebsmittel (200) gemäß einem der Ansprüche 15 bis 17.

FIG 1

# FIG 2

# FIG 3

# FIG 4

Stand der Technik

Europäisches
Patentamt

European
Patent Office

Office européen
des brevets

# EUROPÄISCHER RECHERCHENBERICHT

**Nummer der Anmeldung**

EP 13 19 1587

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 978 926 A1 (MITSUBISHI ELECTRIC CORP [JP]) 9. Februar 2000 (2000-02-09) | 1-6, 13-18 | INV. H02K3/40 |
| Y | * das ganze Dokument * | 7-12 | |
| | ----- | | |
| Y | JP 2004 201417 A (MITSUBISHI ELECTRIC CORP) 15. Juli 2004 (2004-07-15) | 7-12 | |
| A | * Zusammenfassung; Abbildung 2 * | 1-6, 13-18 | |
| | ----- | | |
| A | DE 16 40 111 A1 (FURUKAWA ELECTRIC CO LTD) 16. März 1972 (1972-03-16) * Seite 1 - Seite 7 * | 1-18 | |
| | ----- | | |
| A | DE 37 15 715 A1 (ALCATEL NV [NL]) 3. Dezember 1987 (1987-12-03) * das ganze Dokument * | 1-18 | |
| | ----- | | |
| A | DE 10 2007 050838 A1 (HITACHI LTD [JP]) 5. Juni 2008 (2008-06-05) * das ganze Dokument * | 1-18 | |
| | ----- | | RECHERCHIERTE SACHGEBIETE (IPC) |
| A | JP H09 308159 A (MITSUBISHI ELECTRIC CORP) 28. November 1997 (1997-11-28) * Zusammenfassung; Abbildungen 1-4 * | 1-18 | H02K |
| | ----- | | |
| A | JP 2005 080468 A (MITSUBISHI ELECTRIC CORP) 24. März 2005 (2005-03-24) * Zusammenfassung; Abbildungen 2-6 * | 1-18 | |
| | ----- | | |
| A | JP 2009 118590 A (MITSUBISHI ELECTRIC CORP) 28. Mai 2009 (2009-05-28) * Zusammenfassung; Abbildungen 5-9 * | 1-18 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 2. April 2014 | Wozniak, Doris Anna |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**  EP 13 19 1587

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2014

| Im Recherchenbericht angeführtes Patentdokument | Datum der Veröffentlichung | Mitglied(er) der Patentfamilie | Datum der Veröffentlichung |
|---|---|---|---|
| EP 0978926 A1 | 09-02-2000 | EP 0978926 A1<br>JP 3745383 B2<br>US 6130496 A<br>WO 9931782 A1 | 09-02-2000<br>15-02-2006<br>10-10-2000<br>24-06-1999 |
| JP 2004201417 A | 15-07-2004 | KEINE | |
| DE 1640111 A1 | 16-03-1972 | KEINE | |
| DE 3715715 A1 | 03-12-1987 | AT 386720 B<br>DE 3715715 A1 | 10-10-1988<br>03-12-1987 |
| DE 102007050838 A1 | 05-06-2008 | CN 101179212 A<br>DE 102007050838 A1<br>JP 4913551 B2<br>JP 2008118811 A<br>US 2008106157 A1 | 14-05-2008<br>05-06-2008<br>11-04-2012<br>22-05-2008<br>08-05-2008 |
| JP H09308159 A | 28-11-1997 | KEINE | |
| JP 2005080468 A | 24-03-2005 | KEINE | |
| JP 2009118590 A | 28-05-2009 | JP 5101248 B2<br>JP 2009118590 A | 19-12-2012<br>28-05-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. LIESE ; M. BROWN.** Design Dependent Slot Discharge and Vibration Sparking on High Voltage Windings. *IEEE TRANS DEI,* August 2008, 927-932
- **W. H. MOUDY.** Deterioration Mechanisms in Recent Air Cooled Turbine Generators. *ASME Power, Atlanta, Georgia,* 2006

- **G. C. STONE.** A perspective on online partial discharge monitoring for assessment of the condition of rotating machine stator winding insulation. *IEEE Electrical Insulation Magazine,* 2012